**Europäisches Patentamt**

(19) **European Patent Office**

**Office européen des brevets**

(11) Veröffentlichungsnummer : **0 213 655**
**B1**

(12) **EUROPÄISCHE PATENTSCHRIFT**

(45) Veröffentlichungstag der Patentschrift :
07.06.89

(21) Anmeldenummer : 86201312.5

(22) Anmeldetag : 24.07.86

(51) Int. Cl.⁴ : **H 02 M   3/335**

(54) Anordnung zur Synchronisation der Oszillatoren mehrerer getakteter Gleichspannungswandler.

(30) Priorität : **10.08.85 DE 3528766**

(43) Veröffentlichungstag der Anmeldung :
**11.03.87 Patentblatt 87/11**

(45) Bekanntmachung des Hinweises auf die Patenterteilung : **07.06.89 Patentblatt 89/23**

(84) Benannte Vertragsstaaten :
**CH DE FR GB LI SE**

(56) Entgegenhaltungen :
**WO-A-87 /007 01**
**DE-A- 3 223 179**

(73) Patentinhaber : **Philips Patentverwaltung GmbH**
**Wendenstrasse 35 Postfach 10 51 49**
**D-2000 Hamburg 1 (DE)**
**DE**
**N.V. Philips' Gloeilampenfabrieken**
**Groenewoudseweg 1**
**NL-5621 BA Eindhoven (NL)**
**CH FR GB LI SE**

(72) Erfinder : **Lösel, Walter**
**Anemonenweg 11**
**D-8510 Fürth/Vach (DE)**

(74) Vertreter : **Peuckert, Hermann, Dipl.-Ing. et al**
**Philips Patentverwaltung GmbH Wendenstrasse 35**
**Postfach 10 51 49**
**D-2000 Hamburg 1 (DE)**

## Beschreibung

Die Erfindung betrifft eine Anordnung zur Synchronisation der Oszillatoren mehrerer getakteter Gleichspannungswandler mit je einer Regelschaltung, in der der Oszillator als integrierter Baustein enthalten ist, und bei der die Regelschaltung einen Anschluß für einen Kondensator und einen Anschluß für einen Widerstand zur Festlegung der Frequenz des Oszillators aufweist.

Bei der Fertigung von getakteten Gleichspannungswandlern werden immer häufiger handelsübliche Steuerbausteine verwendet, die im folgenden Regelschaltungen genannt werden. Eine Regelschaltung enthält unter anderem als integrierten Bestandteil — gedacht ist insbesondere an die Bausteine TDA 4714 und TDA 4716 — einen Oszillator, dessen Frequenz durch äußere Beschaltung mit einem Kondensator und einem Widerstand einstellbar ist. Bei freilaufendem Betrieb fällt über dem Kondensator eine sägezahnförmige Spannung ab, bei der die Dauer der ansteigenden Flanken durch den Wert des Widerstandes und die Dauer der fallenden Flanken durch den Kapazitätswert des Kondensators festgelegt ist. Mit der Frequenz des Oszillators ist auch die Schaltfrequenz für den Schalttransistor des Gleichspannungswandlers festgelegt, der von einem Ausgangssignal der Regelschaltung angesteuert wird. Die äquidistanten positiven Flanken dieses Ausgangssignales bestimmen die Einschaltzeitpunkte des Schalttransistors und damit die Zeitpunkte, zu denen eine Belastung der Spannungsquelle auf der Primärseite des Wandlers beginnt und zu denen gleichzeitig geringfügige Spannungsabsenkungen auf der Zuleitung zwischen Spannungsquelle und Gleichspannungswandler entstehen. Werden mehrere Gleichspannungswandler über die gleiche Leitung an die Spannungsquelle angeschlossen, so entstehen auf der Zuleitung Spannungsschwankungen, deren frequenzmäßige Zusammensetzung sich aus der Modulation aller Spannungsschwankungen ergibt, die von den einzelnen Gleichspannungswandlern erzeugt werden. Diese Modulationsprodukte müssen mit Filtern unterdrückt werden, damit andere an die gleiche Zuleitung angeschlossene Verbraucher nicht gestört werden.

Die Unterdrückung der Modulationsprodukte ist nur mit aufwendigen Filtermitteln möglich, wenn die Oszillatoren der einzelnen Gleichspannungswandler nicht mit der gleichen Frequenz schwingen. Dies ist z. B. der Fall, wenn alle Oszillatoren der Gleichspannungswandler zwar nominell auf die gleiche Frequenz eingestellt sind, jedoch wegen der unvermeidbaren Abweichungen von der nominellen Frequenz mit unterschiedlichen Frequenzen schwingen. Praktisch aussichtslos wird Unterdrückung der Modulationsprodukte, sobald thermische Effekte zu zeitlichen Schwankungen der Frequenz eines jeden Oszillators führen. Daher müssen die Oszillatoren der Gleichspannungswandler synchronisiert werden.

Die Synchronisation stellt kein Problem dar, solange die Regelschaltung der Gleichspannungswandler aus Einzelbausteinen aufgebaut ist. Dann kann, wie z. B. in der DE-OS 32 23 179 beschrieben, ein Oszillator für alle Gleichspannungswandler verwendet werden.

Werden jedoch die oben erwähnten integrierten Regelschaltungen eingesetzt, so ist eine Synchronisation nicht ohne weiteres möglich, weil z. B. die Hersteller dieser Regelschaltungen keine Synchronisation von mehreren Oszillatoren vorgesehen haben.

Zusätzliche Überlegungen sind anzustellen, wenn z. B. die Oszillatoren von Gleichspannungswandlern synchronisiert werden sollen, deren Primärseite von der Sekundärseite potentialmäßig getrennt ist und deren in integrierter Technik ausgeführte Regelschaltungen bei einigen Gleichspannungswandlern auf der Primärseite und bei einigen auf der Sekundärseite liegen.

Der Erfindung liegt daher die Aufgabe zugrunde, eine Schaltungsanordnung der eingangs genannten Art anzugeben, bei der die Oszillatoren der einzelnen Gleichspannungswandler potentialmäßig voneinander zu trennen sind.

Diese Aufgabe wird dadurch gelöst, daß die Frequenz des Oszillators eines ersten Gleichspannungswandlers höher eingestellt ist, als die Frequenz der Oszillatoren aller anderen Gleichspannungswandler, daß vom ersten Gleichspannungswandler eine Impulsfolge, deren Impulsfolgefrequenz zur Frequenz seines Oszillators proportional ist, über einen potentialtrennenden Baustein an alle anderen Gleichspannungswandler übertragen wird, daß mit Hilfe der Impulse der Impulsfolge bei dem Kondensator der Regelschaltungen aller anderen Gleichspannungswandler ein vorbestimmter Ladezustand eingestellt wird und daß sich die Einstellung mit der Frequenz des Oszillators des ersten Gleichspannungswandlers wiederholt.

Vorteilhafte Ausgestaltungen der Erfindung sind in den Unteransprüchen angegeben. Anhand der Fig. soll ein Ausführungsbeispiel der Erfindung näher erläutert werden. Die Fig. zeigt die für die Erfindung wesentlichen Bestandteile zweier Gleichspannungswandler.

Die Regelschaltung RS1 eines ersten Gleichspannungswandlers GW1 ist an den dafür vorgesehenen Anschlüssen mit einem Widerstand R1 und einem Kondensator C1 beschaltet. Mit diesen Bausteinen wird die Frequenz des internen Oszillators der Regelschaltung RS1 eingestellt. Über dem Kondensator C1 fällt eine sägezahnförmige Spannung ab, bei der die Dauer der ansteigenden Flanken durch den Wert des Widerstandes R1 und die Dauer der fallenden Flanken durch den Kapazitätswert des Kondensators C1 bestimmt ist. Übersteigt die Spannung am Kondensator C1 eine durch den Hersteller der Regelschaltung RS1 vorgesehene und durch interne Schaltungsmaßnahmen festgelegte Schwelle, so beginnt der Entladevorgang des Kondensators C1.

Die gleichen Vorgänge würden — wenn keine Kopplung mit dem Gleichspannungswandler GW1 bestünde — an einem Kondensator C2 einer Regelschaltung RS2 eines zweiten Gleichspannungswandlers GW2 ablaufen. Ein Widerstand R2, der die Dauer der ansteigenden Flanken der Spannung über dem Kondensator C2 festlegt, ist so gewählt, daß der Anstieg langsamer erfolgt als am Kondensator C1 des Gleichspannungswandlers GW1. Die Frequenz des internen Oszillators der Regelschaltung RS2 ist also kleiner eingestellt als die Frequenz des Oszillators der Regelschaltung RS1. Frequenzabweichungen von 20 % haben sich als günstig erwiesen. Ähnliche Frequenzeinstellungen müßten bei weiteren Gleichspannungswandlern vorgenommen werden, wenn auch deren Oszillatoren mit dem Oszillator des ersten Gleichspannungswandlers GW1 synchronisiert werden sollen.

Der eine Anschluß des Kondensators C1 ist mit der Basis und der andere Anschluß über einen Emitterwiderstand R11 mit dem Emitter einens npn-Transistors T1 verbunden. Der Kollektor des Transistors T1 ist über die Primärwicklung eines Übertragers Ü an den Pluspol + einer nicht genauer dargestellten Spannungsquelle geführt. Überschreitet die Spannung am Kondensator C1 eine unter anderem durch den Emitterwiderstand R11 festgelegte Schwelle, wird die Kollektor-Emitter-Strecke des Transistors T1 leitend. Der dadurch entstehende Stromimpuls führt zu einem Spannungsimpuls über der Sekundärspule des Übertragers Ü, die auf dem Gleichstrompotential der Regelschaltung RS2 des zweiten Gleichspannungswandlers GW2 liegt. Durch ein RC-Differenzierglied C21, R22 wird der Spannungsimpuls auf der Sekundärseite des Übertragers Ü verkürzt. Da das Differenzierglied C21, R22 pro Impuls über der Sekundärspule zwei verkürzte Impulse erzeugt, deren Polarität entgegengesetzt ist, wird einer dieser verkürzten Impulse durch eine Diode D21 unterdrückt. Die Folge der verbleibenden Impulse, deren Impulsfolgefrequenz ebenso groß ist wie die Frequenz des in der Regelschaltung RS1 enthaltenen Oszillators, wird dem Gate-Anschluß eines Feldeffekt-Transistors F1 zugeführt. Sein Drain-Anschluß ist über einen Widerstand R21 mit dem Pluspol + einer ebenfalls nicht näher gekennzeichneten weiteren Spannungsquelle und sein Source-Anschluß mit einem Anschluß des Kondensators C2 verbunden. Ein verkürzter Impuls macht die Drain-Source-Strecke des Transistors F1 leitend, was zu einer sofortigen Aufladung des Kondensators C2 führt, und zwar über die durch interne Schaltungsmaßnahmen festgelgte Schwelle hinaus. Die Folge ist, daß nun der Entladevorgang des Kondensators C2 beginnt. Damit wird der Gleichlauf — bis auf eine unbestimmte Phasendifferenz — der Oszillatoren der Gleichspannungswandler SW1 und SW2 erzwungen.

Sollen die Oszillatoren weiterer Gleichspannungswandler ebenfalls mit dem Oszillator des Gleichspannungswandlers GW1 synchronisiert werden und ist ebenfalls eine Potentialtrennung zwischen allen Regelschaltungen der Gleichspannungswandler gefordert, so ist der Übertrager Ü mit weiteren Sekundärspulen zu versehen und an jede Sekundärspule sind Schaltungen anzuschließen, die mit der in der Fig. gezeigten Schaltung identisch sind.

Ist keine weitere Potentialtrennung gefordert, so können mit dem am Verbindungspunkt zwischen dem Kondensator C21 und dem Widerstand R22 anliegenden Impulspotential weitere Feldeffekt-Transistoren angesteuert werden, über die dann die Kondensatoren der weiteren Regelschaltungen aufgeladen werden.

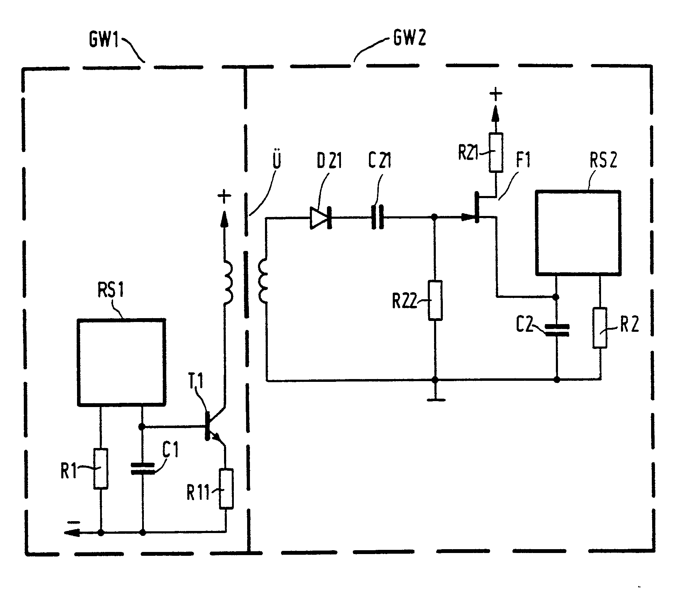

**Patentansprüche**

1. Anordnung zur Synchronisation der Oszillatoren mehrerer getakteter Gleichspannungswandler (GW1, GW2) mit je einer Regelschaltung (RS1, RS2), in der der Oszillator als integrierter Baustein enthalten ist, und bei der die Regelschaltung einen Anschluß für einen Kondensator (C1, C2) und einen Anschluß für einen Widerstand (R1, R2) zur Festlegung der Frequenz des Oszillators aufweist, dadurch gekennzeichnet, daß die Frequenz des Oszillators eines ersten Gleichspannungswandlers (GW1) höher eingestellt ist als die Frequenz der Oszillatoren aller anderen Gleichspannungswandler (GW2), daß vom ersten Gleichspannungswandler (GW1) eine Impulsfolge, deren Impulsfolgefrequenz zur Frequenz seines Oszillators Proportional ist, über einen potentialtrennenden Baustein (Ü) an alle anderen Gleichspannungswandler übertragen wird, daß mit Hilfe der Impulse der Impulsfolge bei dem Kondensator (C2) der Regelschaltungen (RS2) aller anderen Gleichspannungswandler (GW2) ein vorbestimmter Ladezustand eingestellt wird und daß sich die Einstellung mit der Frequenz des Oszillators des ersten Gleichspannungswandlers (GW1) wiederholt.

2. Anordnung nach Anspruch 1, dadurch gekennzeichnet, daß es sich bei dem potentialtrennenden Baustein um einen Übertrager (Ü) handelt.

3. Anordnung nach Anspruch 2, dadurch gekennzeichnet, daß die Kontaktstrecke eines steuerbaren Schalters (T1) in Serie zur Primärwicklung des Übertragers (Ü) geschaltet ist und daß der Schalter (T1) geschlossen wird, wenn die Spannung über dem Kondensator (C1) der Regelschaltung (RS1) des ersten Gleichspannungswandlers (GW1) einen Schwellwert überschreitet.

4. Anordnung nach Anspruch 3, dadurch gekennzeichnet, daß es sich bei dem steuerbaren Schalter um einen npn-Transistor (T1) mit einem Emitterwiderstand (R11) handelt und daß der Kondensator (C1) der Regelschaltung (RS1) des ersten Gleichspannungswandlers (GW1) parallel zur Serienschaltung von Basis-Emitter-Strecke und Emitterwiderstand (R11) des npn-Transistors (T1) liegt.

5. Anordnung nach Anspruch 3, dadurch gekennzeichnet, daß im Sekundärkreis des Übertragers (Ü) eine Gleichrichterdiode (D21) liegt, auf die ein RC-Differenzierglied (R22, C21) folgt.

6. Anordnung nach Anspruch 5, dadurch gekennzeichnet, daß mit den Ausgangsimpulsen des RC-Differenziergliedes (R22, C21) ein weiterer steuerbarer Schalter (F1) geschlossen wird, über dessen Kontaktstrecke der Kondensator (C2) der Regelschaltung (RS2) eines anderen Gleichspannungswandlers (RS2) über eine vorbestimmte Schwelle hinaus aufgeladen wird.

7. Anordnung nach Anspruch 6, dadurch gekennzeichnet, daß es sich bei dem weiteren steuerbaren Schalter um einen Feldeffekt-Transistor (F1) handelt.

## Claims

1. An arrangement for synchronizing the oscillator of a plurality of clocked direct voltage converters (GW1, GW2) each having a control circuit (RS1, RS2), in which the oscillator is included as an integrated element and in which the control circuit has a connection for a capacitor (C1, C2) and a connection for a resistor (R1, R2) for defining the frequency of the oscillator, characterized in that the frequency of the oscillator of a first direct voltage converter (GW1) is adjusted such as to be higher than the voltage converters (GW2), in that a pulse train, whose pulse frequency is proportional to the frequency of its oscillator is transmitted through an element (Ü) providing the isolation between the potentials to all the further direct voltage converters, in that by means of the pulses of the pulse train a predetermined charging state is adjusted for the capacitor (C2) of the control circuits (RS2) of all the further direct voltage converters (GW2), and in that the adjustment is repeated with the frequency of the oscillator of the first direct voltage converter (GW1).

2. An arrangement as claimed in Claim 1, characterized in that the element providing the isolation between the potentials is constituted by a transformer (Ü).

3. An arrangement as claimed in Claim 2, characterized in that the contact path of a controllable switch (T1) is connected in series with the primary winding of the transformer (Ü) and in that the switch (T1) is closed when the voltage across the capacitor (C1) of the control circuit (RS1) of the first direct voltage converter (GW1) exceeds a threshold value.

4. An arrangement as claimed in Claim 2, characterized in that the controllable switch is constituted by an npn transistor (T1) having an emitter resistor (R11) and in that the capacitor (C1) of the control circuit (RS1) of the first direct voltage converter (GW1) is arranged parallel to the series arrangement of the base-emitter path and the emitter resistor (R11) of the npn transistor (T1).

5. An arrangement as claimed in Claim 3, characterized in that the secondary circuit of the transformer (Ü) includes a rectifier diode (D21), which is followed by a differentiating element (R22, C21).

6. An arrangement as claimed in Claim 5, characterized in that by the output pulses of the RC differentiating element (R22, C21) a further controllable switch (F1) is closed, through whose contact path the capacitor (C2) of the control circuit (RS2) of another direct voltage converter (GW2) is charged to above a predetermined threshold.

7. An arrangement as claimed in Claim 6, characterized in that the further controllable switch is constituted by a field effect transistor (F1).

## Revendications

1. Montage pour la synchronisation des oscillateurs de plusieurs convertisseurs à courant continu (GW1, GW2) à mode de commutation, comportant chacun un circuit de régulation (RS1, RS2) dans lequel l'oscillateur est présent sous la forme d'un composant intégré, et pour lequel le circuit de régulation présente une connexion pour un condensateur (C1, C2) et une connexion pour une résistance (R1, R2) en vue de la fixation de la fréquence de l'oscillateur, caractérisé en ce que la fréquence de l'oscillateur d'un premier convertisseur à courant continu (GW1) est réglée plus haute que la fréquence des oscillateurs de tous les autres convertisseurs à courant continu (GW2) ; qu'à partir du premier convertisseur à courant continu (GW1), une séquence d'impulsions, dont la fréquence de répétition des impulsions est proportionnelle à la fréquence de son oscillateur, est transmise, par l'intermédiaire d'un module séparateur de potentiel (Ü), à tous les autres convertisseurs à courant continu ; qu'à l'aide des impulsions de la séquence d'impulsions, un état de charge prédéfini est réglé au niveau du condensateur (C2) des circuits de régulation (RS2) de tous les autres convertisseurs à courant continu (GW2), et que le réglage est répété à la fréquence de l'oscillateur du premier convertisseur à courant continu (GW1).

2. Montage suivant la revendication 1, caractérisé en ce que le composant séparateur de potentiel est un transformateur (Ü).

3. Montage suivant la revendication 2, caractérisé en ce que le trajet de contact d'un interrupteur commandé (T1) est en série avec le primaire du transformateur (Ü) et que l'interrupteur (T1) est fermé lorsque la tension sur le condensateur (C1) du circuit de régulation (RS1) du premier convertisseur à courant continu (GW1) excède une valeur de seuil.

4. Montage suivant la revendication 3, caractérisé en ce que l'interrupteur commandé est un transistor npn (T1) comportant une résistance d'émetteur (R11), et que le condensateur (C1) du circuit de régulation (RS1) du premier convertisseur à courant continu (GW1) est en parallèle avec le montage en série du trajet base-émetteur et de la résistance d'émetteur (R11) du transistor npn (T1).

5. Montage suivant la revendication 3, caractérisé en ce que, le secondaire du transformateur (Ü) comprend une diode redresseuse (D21), suivie d'un élément différenciateur RC (R22, C21).

6. Montage suivant la revendication 5, caractérisé en ce qu'un autre interrupteur commandé (F1), par l'intermédiaire du trajet de contact duquel le condensateur (C2) du circuit de régulation (RS2) d'un autre convertisseur à courant continu (GW2) est chargé au-delà d'un seuil prédéfini, est fermé par les impulsions de sortie de l'élément différenciateur RC (R22, C21).

7. Montage suivant la revendication 6, caractérisé en ce que l'autre interrupteur commandé est un transistor à effet de champ (F1).